# EUROPEAN PATENT APPLICATION

(11) **EP 0 787 437 A2**
(43) Date of publication of application: **06.08.1997**
(21) Application number: 97200193.7
(22) Date of filing: 24.01.1997
(51) Int. Cl.: A23P 1/02, A23D 9/05

(54) **Granular food product**

(30) Priority: 07.02.1996 EP 96810080
(71) Applicant: SOCIETE DES PRODUITS NESTLE S.A., 1800 Vevey (CH)
(72) Inventor: Bonnasse Gahot, Sabine, 1434 Ependes (CH); Burri, Josef, 1066 Epalinges (CH); Geromini, Osvaldo, 1350 Orbe (CH); Heck, Ernst, 1302 Vufflens-La-Ville (CH); Reimerdes, ERNST H., 1096 Cully/Villette (CH); Sirohi, Dhan Pal, 1009 Pully (CH)
(74) Representative: Wavre, Claude-Alain

(57) **Abstract**

A process for the production of a free flowing and instantly dispersible and/or soluble granular food product, comprising mixing powdery carbohydrates and/or protein rich materials with an oil or fat, further mixing the mixture thus obtained with further powdery carbohydrates and/or protein rich materials in order to obtain a powdery and/or doughlike mix, forming the mix into granules by moistening and particle to particle contacting, and drying the granules.

## Description

The present invention relates to a process for the production of a free flowing and instantly dispersible and/or soluble granular food product.

DD-A-248502 (Institut für Getreideverarbeitung) discloses a process for the production of instant sauces or soups in the form of granules by preparing a powdery or doughlike mixture of protein hydrolysate, meat or vegetable material, instant flour or semolina, salt, sugar and spices, granulating it with a press or with an extruder, fluidised bed coating the granules with oil, carbohydrates or gums and drying them.

GB-A-2131271 (Institut für Getreideverarbeitung) discloses a process for the production of a granulated food based on milk or other animal or vegetable proteins, carbohydrates, fats and minerals which comprises mixing powdery components in a fluidised bed and spraying a liquid mix of the remaining components into the powdery components, the powdery material being coated and agglomerated by the sprayed material and dried simultaneously in the fluidised bed.

US-A-5332585 (Odermatt et al.) discloses a process for preparing a granular food product by mixing a molten fat with an amylaceous material, extruding the mixture in strands, cooling the strands, subdividing them into sections and projecting the sections through a grill to reduce them into granules.

US-A-4578274 (Sugisawa et al.) discloses a process for preparing a granular curry product by mixing fat flakes with powdery materials, heating the mixture, agitating and cooling it.

FR-A-1203715 (CARNATION) discloses a process for preparing an instant and easily dispersible soup by preparing a powdery mixture of all the ingredients and agglomerating it with water droplets and/or vapour in a tower.

FR-A-1348948 (PROCTER & GAMBLE) discloses a process for preparing free flowing and easily dispersible confectionary food mixtures by agglomerating powdery food materials comprising flour, shortening and/or sugar with a liquid binding agent such as a concentrated sugar solution or a molten shortening in a tumbler or in a fluidised bed.

US-A-3142569 (Scheidegger) discloses a process for preparing a powdered foodstuff in which fat is dispersed by grinding a mixture of foodstuff, fat and little water and drying.

The problem addressed by the present invention was to provide a novel and simple process for the production of a free flowing and instantly dispersible and/or soluble granular food product from carbohydrates, proteins, and oil or fats.

To this end, the process according to the present invention comprises mixing powdery carbohydrates and/or protein rich materials with an oil or fat, further mixing the mixture thus obtained with further powdery carbohydrates and/or protein rich materials in order to obtain a powdery and/or doughlike mix, forming the mix into granules by moistening and particle to particle contacting, and drying.

The process according to the present invention indeed enables a free flowing granular food product to be produced from carbohydrates, proteins, and oil or fats which is instantly dispersible and/or soluble in warm or boiling water and which is thus suitable for the preparation of instant food in pap or liquid form.

The present process even surprisingly enables a granular food product to be produced from carbohydrates, proteins, and oil or fats which, if simply shaken together with warm or boiling water, instantly provides a stable emulsion although it has never been homogenised. As a matter of fact, to our best knowledge, up to now the preparation of a liquid infant product with a significant amount of fat would have needed a prehomogenisation step in order that the fat does not separate after reconstitution with water.

Another main advantage of the present invention may be seen in the fact that the total moisture content of the materials involved may be kept very low throughout the whole process.

Throughout the present specification and claims the expression "stable emulsion" means that a fat phase is predominantly present in form of small globules homogeneously dispersed in a liquid phase without any phase separation being observed.

The present process may start from carbohydrates, proteins and/or oil or fats in form of the components of an animal or vegetable material, such as milk solids, cereal flour or soya flour, and/or in form of individual components, such as starch, polysaccharides, maltodextrines, saccharose, lactose, glucose, egg proteins, gluten, protein concentrates or protein isolates from milk, whey or soya, triglycerides of animal or vegetable origin, milk fat, palm oil, palm olein, coconut oil, or rape seed oil, for example.

Thus, it is possible to prepare a mix which comprises, in part by weights, from 5 to 95 parts, preferably from 30 to 70 parts of carbohydrates, up to 40 parts, preferably from 15 to 30 parts of proteins, and up to 80 parts, preferably from 5 to 40 parts of oil or fats, for example.

The following components may be added before and/or after preparing said mix:
- up to 25 parts, preferably up to 15 parts of water, more preferably an amount of water such that the total moisture content of the mix before drying is up to 11%, and most preferably an amount of water such that the total moisture content of the mix before drying is up to 7.5%,
- up to 5 parts, preferably up to 0.6 part of emulsifier, such as lecithin, mono- and/or diglycerides,
- up to 3 parts, preferably up to 1 part of stabilizers, such as pectine, xanthan and other gums,
- and, optionally, vitamins, micronutrients and/or antioxidants.

The step of mixing powdery carbohydrates and/or protein rich materials with an oil or fat preferably comprises mixing together in a mixer, such as e.g. a horizontal mixer with plow-shaped heads arranged on its horizontal shaft, a conical mixer with an orbiting helical screw or a bowl chopper, for about 5 to about 15 min at a temperature of from above about 45°C to about 65°C:
- from 15 to 25 parts of oils, especially coconut oil, palm olein and/or soya bean oil, which have a clear melting point of between 30-45°C,and
- from 15 to 25 parts of lactose, or from 10 to 20 parts of starch, or from 40 to 50 parts of skimmed milk powder.

The step of further mixing the mixture thus obtained with further powdery carbohydrates and/or protein rich materials in order to obtain a powdery and/or doughlike mix preferably comprises agitating said mixture in a mixer, such as e.g. a horizontal mixer with plow-shaped heads arranged on its horizontal shaft, a ribbon mixer, a pastry mixer or a bowl chopper, at a temperature of from about 45°C to about 65°C for up to 2 min, and progressively adding while further agitating for about 5 to 15 min and while cooling the mixer with water at about room temperature:
- skimmed milk powder, starch, especially cold swelling starch and/or lactose in respective amounts such that the total amount of each of these materials in the mix is from 40 to 50 parts for the skimmed milk powder, from 10 to 20 parts for the starch and from 15 to 25 parts for the lactose.

The mix obtained at this stage may have a texture intermediate between a powdery texture and the texture of a dough. It may be said to be a thick powder which is not really free flowing, for example.

The step of forming the mix into granules by moistening and particle to particle contacting may be carried out with the aid of steam and/or an aqueous solution of a binder, especially of maltodextrin, gums or starch, in any adequate agglomerating and/or forming apparatus, preferably in an apparatus exerting a compressing and/or an agitating effect on the mix such as a dragee pan or a vertical agglomerator with knifes arranged around its vertical shaft rotating within a flexible rubber tube, or in case of use of a bowl chopper directly into it, or by sieve granulation, for example.

Remaining ingredients such as emulsifier, stabilizer, micronutrients and/or vitamins may be added during the forming step, for example.

The granules thus obtained may then be dried to a residual water content of between 1 to 5 %, preferably between 2 to 3.5%. In case of use of a bowl chopper this drying step may be carried out by flashing which enables to also adjust the granules hardness.

These granules may have a bulk density of from about 400 g/l to about 600 g/l, for example.

They are instantly dispersible and/or soluble in warm or boiling water and they are suitable for the preparation of instant food in pap or liquid form.

Further forming steps such as compacting and or spheronising may be provided for, so that the bulk density of the granules be increased up to values between about 500 and 1000 g/l, for example.

An embodiment of the process according to the present invention is illustrated in the following Example in which percentages and parts are by weight.

### Example 1

19 parts of an oil composition containing equal amounts of coconut oil, palm olein and soya bean oil were mixed with 19 parts of lactose at 60°C for 10 min in a conical mixer with an orbiting helical screw.

The mixture was agitated in a horizontal mixer with plow-shaped heads arranged on its horizontal shaft (LOEDIGE mixer) at 60°C for 1 min and further mixed successively for 3 min with 14 parts cold swelling starch and for 7 min with 43 parts skimmed milk powder, while cooling the mixer with water at room temperature.

The powdery mix thus obtained had a moisture content of 3.5%. It had a texture intermediate between a powdery texture and the texture of a dough. It could be defined as a thick powder which was not really free flowing.

It was formed into granules with the aid of 7.5 parts of an aqueous solution of maltodextrin (40% water and 60% maltodextrin) in a vertical agglomerator with knifes arranged around its vertical shaft rotating within a flexible rubber tube (SCHUGI agglomerator).

The granules thus obtained had a moisture content of 6.2%. They were dried in a fluidised bed dryer to a residual moisture content of 3.1%.

The dried granules had a bulk density of 580 g/l. They were free flowing and instantly dispersible in warm or boiling water.

29 g of these granules simply shaken together with 158 ml warm water (50°C) instantly provided a stable emulsion.

## Claims

1. A process for the production of a free flowing and instantly dispersible and/or soluble granular food product, comprising mixing powdery carbohydrates and/or protein rich materials with an oil or fat, further mixing the mixture thus obtained with further powdery carbohydrates and/or protein rich materials in order to obtain a powdery and/or doughlike mix, forming the mix into granules by moistening and particle to particle contacting, and drying the granules.

2. A process as claimed in claim 1, in which said mix comprises, in part by weights, from 5 to 95 parts of carbohydrates, up to 40 parts of proteins, and up to 80 parts of oil or fats.

3. A process as claimed in claim 2, in which the following components are added before and/or after preparing said mix:
- up to 25 parts of water,
- up to 5 parts of emulsifier, and
- up to 3 parts of stabilizers.

4. A process as claimed in claim 1, in which said mix comprises, in part by weights, from 30 to 70 parts of carbohydrates, from 15 to 30 parts of proteins, and from 5 to 40 parts of oil or fats.

5. A process as claimed in claim 4, in which the following components are added before and/or after preparing said mix:
- up to 15 parts of water,
- up to 0.6 part of emulsifier,
- up to 1 part of stabilizers, and
- vitamins, micronutrients and/or antioxidants.

6. A process as claimed in claim 5, in which the amount of water added before and/or after preparing said mix is such that the total moisture content of the mix before drying is up to 11%.

7. A process as claimed in claim 1, which comprises forming the mix into granules by moistening and particle to particle contacting with the aid of steam and/or an aqueous solution of a binder in an apparatus exerting a compressing and/or an agitating effect on the mix.

8. A process as claimed in claim 1, which comprises forming the mix into granules by moistening and particle to particle contacting with the aid of steam and/or an aqueous solution of maltodextrin, gums or starch, in a vertical agglomerator with knifes arranged around its vertical shaft rotating within a flexible rubber tube.

9. A process as claimed in claim 1, which comprises drying the granules to a residual water content of between 1 to 5%.

10. A process as claimed in claim 1, which comprises drying the granules to a residual water content of between 2 to 3.5%.
